# EUROPÄISCHE PATENTSCHRIFT

(11) **EP 0 668 254 B1**
(45) Veröffentlichungstag und Bekanntmachung des Hinweises auf die Patenterteilung: **08.07.1998**
(21) Anmeldenummer: 95101880.3
(22) Anmeldetag: 11.02.1995
(51) Int. Cl.: C04B 35/571

(54) **Verfahren zur Herstellung von sauerstoffreien bzw. sauerstoffarmen hochtemperaturbeständigen Siliciumcarbidformkörpern**
Method of making high temperature-resistant silicon carbide articles having no or low oxygen content
Procédé de fabrication de corps en carbure de silicium résistant à la température élevée ayant aucune ou une petite teneur d'oxygène

(30) Priorität: 22.02.1994 DE 4405603
(43) Veröffentlichungstag der Anmeldung: 23.08.1995
(73) Patentinhaber: BAYER AG, 51368 Leverkusen (DE)
(72) Erfinder: Richter, Robin, D-09627 Hilbersdorf (DE); Martin, Hans-Peter, Dr., D-09599 Freiberg (DE); Roewer, Gerhard, Prof. Dr., D-09599 Freiberg (DE); Müller, Eberhard, Prof. Dr., D-07747 Jena (DE); Krämer, Hans, Dr., D-09627 Hilbersdorf (DE); Sartori, Peter, Prof. Dr., D-47495 Rheinberg (DE); Oelschläger, Andreas, D-45475 Mülheim a.d. Ruhr (DE); Habel, Wolfgang, Dr., D-45475 Mülheim a.d. Ruhr (DE); Harnack, Bernhard, D-47199 Duisburg (DE)

(56) Entgegenhaltungen:
- EP-A- 0 139 257
- EP-A- 0 251 678
- EP-A- 0 496 574
- US-A- 5 171 722
- DATABASE WPI Week 8930, Derwent Publications Ltd., London, GB; AN 89-217639 'Inorganic carbide fibre mfr.' & JP-A-1 156 509 (TEIJIN KK) 20. Juni 1989

## Beschreibung

Die Erfindung betrifft ein Verfahren zur Herstellung von sauerstofffreien bzw. sauerstoffarmen Siliciumcarbidformkörpern, insbesondere SiC-Fasern, unter Nutzung chemisch-reaktiver Polysilane oder Polycarbosilane als Precursoren.

Die Herstellung von SiC-Fasern unter Verwendung von Polycarbosilanen ist bekannt.

So wird z.B. ausgehend von Poly(dimethylsilan) durch einen pyrolytischen Schritt zunächst methylhaltiges Polycarbosilan hergestellt, das zur Faser versponnen wird und durch Oxidation unter Bildung einer Si-O-haltigen Stützschicht stabilisiert wird. Die Behandlung mit Sauerstoff führt in der resultierenden pyrolisierten SiC-Faser zu einem Anteil von 20% SiO₂. Dieser hohe Si-O-Bindungsanteil führt jedoch bei thermischer Beanspruchung zu einer Verschlechterung der mechanischen Eigenschaften und damit zu einer Zerstörung der Fasern.

Allgemein gilt, daß mit steigendem Sauerstoffgehalt die Stabilität einer SiC-Faser bei Temperaturen > 1000 °C drastisch abnimmt.

Gemäß US-PS 4 052 430 und US-PS 4 100 233 werden Polysilane thermisch zu Polycarbosilanen umgewandelt, diese dann zu Grünfasern versponnen und bei Temperaturen von 350 bis 400°C in 2 bis 48 Stunden unter Vakuum pyrolisiert. Die Stabilisierung der Faserform erfolgt ebenfalls durch Oxidation bei 50 bis 400°C.

In US-PS 4 220 600 und US-PS 4 283 376 werden Verfahren zur Herstellung von SiC-Fasern beschrieben, die als Grundsubstanz Polycarbosilane mit Si-O-Anteilen im Molekülgerüst verwenden. Derartige Polycarbosilane werden durch Pyrolyse von Polysilanen unter Zusatz von 0,01 bis 15 Gew.-% Poly(borosiloxan) erhalten. Die Stabilisierung der gesponnenen Fasern erfolgt ebenfalls durch Erhitzen in einer oxidativen Atmosphäre unter Bildung von Si-O-Bindungsanteilen bei Temperaturen zwischen 50 und 400°C.

Die Stabilisierung durch Gamma- oder Elektronen-Bestrahlung in oxidativer oder nichtoxidativer Atmosphäre wird ebenfalls beschrieben.

Gemäß US-PS 4 737 552 wird eine Mischung aus Polycarbosilan, einem Katalysator zur Hydrosilierung und einer ungesättigten Verbindung versponnen, die Grünfaser in inerter Atmosphäre oder im Vakuum bei Temperaturen von 150 bis 400°C durch thermische Behandlung unschmelzbar gemacht und anschließend pyrolisiert.

Die US-PS 5 171 722 geht von der Lösung eines Polycarbosilans, eines Polyvinylsilazans, und eines Katalysators, der bevorzugt H₂ oder CH₃-Radikale erzeugt, aus. Die aus der Lösung ersponnenen Grünfasern werden im Temperaturbereich von 25 bis 200°C über einen Zeitraum von 0,5 bis 24 Stunden erhitzt und stabilisiert. Die anschließende Pyrolyse erfolgt unter inerter Atmosphäre oder im Vakuum bei 600 bis 1000°C.

EP 0 496 574 beschreibt die Darstellung von SiC-Fasern mit geringem Sauerstoffgehalt. Die Stabilisierung des Fasergerüstes findet hierbei während der thermischen Behandlung einer Polycarbosilan-Grünfaser in einer Atmosphäre von Kohlenwasserstoffen, Halogenkohlenwasserstoffen oder ungesättigten Kohlenwasserstoffen statt.

All diesen genannten Verfahren ist die Notwendigkeit gemeinsam, die Form der gesponnenen Grünfasern zu stabilisieren, also unschmelzbar zu machen. Die großtechnisch angewandte Methode ist der oxidative Schutz der Grünfaser. Aber durch den einwirkenden Sauerstoff wird die thermische Beanspruchbarkeit der SiC-Faser stark erniedrigt, so daß eine Nutzung der Fasern im Hochtemperaturbereich nicht gegeben ist.
Die Möglichkeit, durch Bestrahlung die Faser zu stabilisieren, ist sehr kostenintensiv und wird deshalb nur für begrenzte industrielle Anwendungsgebiete oder nur im Labormaßstab angewendet werden.

Ziel der Erfindung ist die Herstellung von sauerstofffreien bzw. sauerstoffarmen SiC-Formkörpern mit überlegenen mechanischen Eigenschaften im Hochtemperaturbereich.

Die Aufgabe der Erfindung wird dadurch gelöst, daß polymere siliciumorganische Verbindungen z.B. Polysilane und Polycarbosilane mit chemisch reaktiven Zentren unter inerten Bedingungen versponnen werden, danach vorzugsweise in Gegenwart von reaktiven Gasen z.B. in Gegenwart von Ammoniak oder Methylaminen in Gasgemischen mit Argon oder in reiner Form stabilisiert oder unter sanften Bedingungen durch thermische Behandlung stabilisiert werden und anschließend unter anaeroben Bedingungen in inerter Atmosphäre bei Temperaturen > 1000°C pyrolisiert werden.

Die polymeren siliciumorganischen Verbindungen, die erfindungsgemäß zur Herstellung von SiC-Formkörpern, insbesondere SiC-Fasern eingesetzt werden, lassen sich in folgende Gruppen einteilen
a) Polycarbosilane auf Basis von Struktureinheiten der allgemeinen Formel I 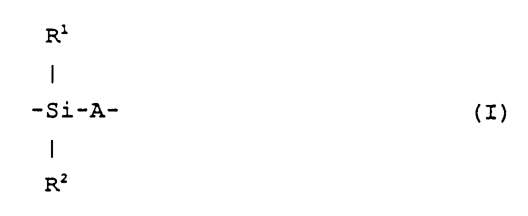 worin
   - R¹: für Halogen, vorzugsweise Chlor, Wasserstoff, Alkyl, Cycloalkyl, Aryl oder Arylalkyl steht, wobei R¹ in verschiedenen Einheiten ein und desselben Polycarbosilans auch unterschiedliche Bedeutung besitzen kann,
   - R²: für Halogen, vorzugsweise Chlor, Alkyl, Cycloalkyl, Aryl oder Arylalkyl steht, wobei R² in verschiedenen Einheiten ein und desselben Polycarbosilans auch unterschiedliche Bedeutung besitzen kann und
   - A: für einen geradkettigen oder verzweigten Alkylenrest oder einen Arylenrest oder substituierten Arylenrest oder für einen Cycloalkylenrest steht, wobei A in verschiedenen Einheiten ein und desselben Polycarbosilans auch unterschiedliche Bedeutung besitzen kann.

   Die Herstellung dieser Polycarbosilane erfolgt gemäß dem Verfahren nach DE 3 841 348, DE 4 018 374, DE 3 917 838.
b) Polysilane bzw. Polycarbosilane auf Basis von Struktureinheiten der allgemeinen Formel II 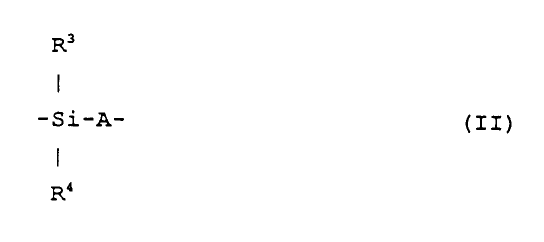 worin
   - R³: für Halogen, vorzugsweise Chlor, Wasserstoff, Alkyl, Cycloalkyl, Aryl, Arylalkyl, Silyl, Silylen steht, wobei R³ in verschiedenen Einheiten ein und desselben Polysilans auch unterschiedliche Bedeutung besitzen kann,
   - R⁴: für Halogen, vorzugsweise Chlor, Wasserstoff, Alkyl, Cycloalkyl, Aryl, Arylalkyl, Silyl, Silylen steht, wobei R⁴ in verschiedenen Einheiten ein und desselben Polysilans auch unterschiedliche Bedeutung besitzen kann.
   - A: für einen Silylen-, einen geradkettigen oder verzweigten Alkylen-, einen Cycloalkylen-, einen Arylenrest oder einen substituierten Arylenrest oder ein komplexstabilisiertes Metall, vorzugsweise Titan, Zirkonium, Wolfram z.B. mit Pentamethylcyclopentadienyl(cp *) oder Cyclopentadienyl(cp) steht, wobei A in verschiedenen Einheiten ein und desselben Polysilans auch unterschiedliche Bedeutung besitzen kann.

   Diese Polysilane werden durch katalytische Disproportionierung von Disilanen z.B. nach dem Verfahren gemäß DE 4 207 299 hergestellt unter Verwendung eines heterogenen Katalysa tors oder durch homogene Reaktion in Gegenwart von Tetramethylendiamin (TMEDA).
   Durch die katalysierte Disproportionierung von vorzugsweise chlorhaltigen Disilanen in Gegenwart von Olefinen werden Polymere hergestellt, deren Erspinnbarkeit wesentlich verbessert ist.
   Ebenso kann auch der Einbau eines zweiten carbidbildenden Elementes in das Polysilan-/-carbosilangerüst, vorzugsweise der Übergangselemente der 4. bis 6. Nebengruppe des PSE erreicht werden. Hierfür wird zur Disproportionierungsreaktion ein Gemisch aus Methylchlordisilanen und Cyclopentadienylverbindungen z.B. des Titan, Zirkonium, Wolfram eingesetzt. Olefine können ebenfalls in diesem Gemisch enthalten sein.
c) Polycarbosilane auf Basis von Struktureinheiten der allgemeinen Formel III 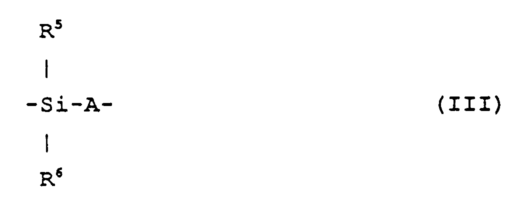 worin
   - R⁵: für Halogen, vorzugsweise Chlor, Wasserstoff, Alkyl, Cycloalkyl, Aryl, Arylalkyl, Alkenyl, vorzugsweise Vinyl, Cycloalkenyl, Alkinyl, vorzugsweise Ethinyl, Propargyl oder Cycloalkinyl steht, wobei R⁵ in verschiedenen Einheiten ein und desselben Polycarbosilans auch unterschiedliche Bedeutung besitzen kann,
   - R⁶: für Halogen, vorzugsweise Chlor, Alkyl, Cycloalkyl, Aryl, Arylalkyl, Alkenyl, vorzugsweise Vinyl, Cycloalkenyl, Alkinyl, vorzugsweise Ethinyl, Propargyl oder Cycloalkinyl steht, wobei R⁶ in verschiedenen Einheiten ein und desselben Polycarbosilans auch unterschiedliche Bedeutung besitzen kann.
   - A: für einen geradkettigen oder verzweigten Alkylen-, einen Cycloalkylen-, einen Alkenylen-, einen Alkinylen-, einen Arylen- oder einen substituierten Arylenrest steht, wobei A in verschiedenen Einheiten ein und desselben Polycarbosilans auch unterschiedliche Bedeutung besitzt.

   Diese Polycarbosilane werden durch Grignard-Reaktionen von teilweise oder vollständig halogenierten, vorzugsweise chlorierten Polycarbosilanen der allgemeinen Formel I in die entsprechenden teilweise oder vollständig alkenylierten oder alkinylierten Verbindungen umgesetzt. Insbesondere wurden vollständig halogenierte Edukte des Typs Si(Hal)₂-A teilweise alkenyliert oder alkinyliert.

In einer bevorzugten Variante wurden Produkte des Typs Si(Hal)₂₋ₓ(R)ₓ-A mit Hal = Chlor, Brom und R = Alkenyl, Alkinyl, Cycloalkenyl, Cycloalkinyl hergestellt.

Die alkenylischen und alkinylischen Gruppen stellen zusammen mit den Halogenen am Silicium reaktive polymere Reaktionszentren dar, die z.B. durch sanfte thermische Behandlung bei Temperaturen unter dem Schmelzpunkt des jeweiligen Polycarbosilans oder durch elektromagnetische Bestrahlung in einen formstabilisierten und hochvernetzten Zustand überführt werden. Die Gegenwart von bekannten radikalbildenden Katalysatoren, z.B. Dicumylperoxid, Benzoylperoxid, Di-t-butylperoxid fördert diese Stabilisierung.

In einer bevorzugten Ausführungsform erfolgt die Stabilisierung in Gegenwart von reaktiven Gasen.

In einer bevorzugten Ausführungsvariante zur Herstellung der Polysilane der allgemeinen Formel II werden als Ausgangsprodukte für die katalysierte Disproportionierung Methylchlordisilane, Olefine und katalytisch wirkende Verbindungen mit basischen, nucleophilen Eigenschaften und charakteristischen Redoxverhalten z.B. Derivate des Hexamethylphosphorsäuretriamides (HMPT) die auf einen Träger fixiert sind oder Tetramethylendiamin (TMEDA) für die homogene Reaktion eingesetzt.

Zum Beispiel läßt sich die Reaktion von 1.1.2.2 Tetrachlordimethylsilan mit Styren sowohl in heterogen katalysierter Variante mit Katalysatoren entsprechend DE 4 207 299, als auch homogen mit TMEDA durchführen.

Über den Anteil des Styrens im Reaktionsgemisch läßt sich das Silicium-Kohlenstoffverhältnis und der Chlorgehalt des isolierten Poly(silan-co-styrens) einstellen.

Auch die physikalischen Eigenschaften der Reaktionsprodukte, wie z.B. Fließverhalten, Viskoelastizität, Schmelzbereiche sind somit steuerbar.

Diese Größen sind besonders im Hinblick auf die Erspinnung im Schmelzspinnverfahren von zentraler Bedeutung.

Die Wahl der katalytischen Komponente und des jeweiligen Temperaturregimes bestimmen Polymerisationsgrad, Molmasse, deren Verteilung und Vernetzung.

Anstelle von Styren können auch andere Olefine eingesetzt werden, z.B. Dimethylfulven, Acrylnitril, Divinylbenzen, Cyclopentadien, vinylhaltige Silane, Butadien, Isopren.

Aus den genannten chemisch-reaktiven Polysilanen bzw. Polycarbosilanen werden die Filamente ersponnen, indem die Polymerschmelze mittels Druck durch eine Spinndüse, vorzugsweise mit einem Kapillardurchmesser von 100 bis 300 µm, extrudiert wird.

Unmittelbar hinter der Düse erfolgt die Verstreckung der Filamente, wobei auch eine spätere Verstreckung (Reckung) möglich ist. Die verstreckten Filamente mit einem Durchmesser zwischen 10 und 25 µm werden auf eine Spule gewickelt. Die Faserverstreckung und die Faseraufnahme auf den rotierenden Zylinder bilden eine technologische Einheit, wobei die Drehzahl des rotierenden Zylinders, die beliebig eingestellt werden kann, den Filamentdurchmesser bestimmt.

Der gesamte Spinn- und Verstreckprozeß sollte, um Sauerstoffverunreinigungen durch Reaktion der Polymere mit Luftfeuchtigkeit zu vermeiden, unter Inertatmosphäre durchgeführt werden.

Zur Vernetzung und somit zur Stabilisierung der ersponnenen Filamente werden diese erfindungsgemäß unter anaeroben Bedingungen mit reaktiven Gasen behandelt, die mit den eingesetzten Polysilanen bzw. Polycarbosilanen reagieren und zur Vernetzung führen. Vorzugsweise werden als reaktive Gase Ammoniak oder Methylamine oder Schwefelwasserstoff in Gasgemischen mit Argon oder in reiner Form eingesetzt. Eine Temperaturerhöhung wirkt hierbei beschleunigend auf diesen Prozeß.

Infolge der ablaufenden Vernetzung können auch Temperaturen oberhalb des Schmelzbereiches der Polymere angewandt werden.

Zum Beispiel führen folgende Vernetzungsreaktionen zur Formstabilisierung der Filamente:

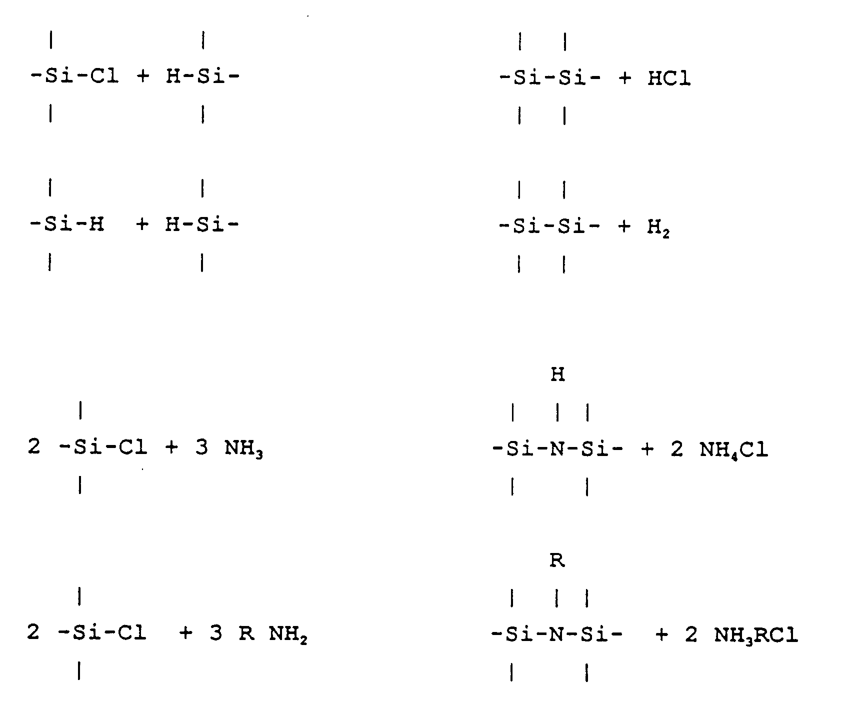

Die vernetzten Filamente werden unter anaeroben Bedingungen in Gegenwart von Argon oder einer anderen inerten Atmosphäre mit Aufheizgeschwindigkeiten von 1 bis 20 K/min vorzugsweise mit 10 K/min, bei Temperaturen > 1000°C pyrolysiert. Vorzugsweise werden Temperaturen zwischen 1000 und 1200°C angewandt. Die im Ergebnis der Pyrolyse erhaltenen Siliciumcarbidfasern bestehen aus amorphen, unvollständig oder vollständig kristallinen Siliciumcarbid.

Die erfindungsgemäß hergestellten Siliciumcarbidfasern weisen Zugfestigkeiten von mehr als 1 GPa und E-Module von mehr als 150 GPa auf. Der Sauerstoffgehalt liegt bei weniger als 2 %. Werte zwischen 0,2 bis 0,05 % sind im allgemeinen zu erreichen.

Die Hauptkomponente der Fasern ist Siliciumcarbid, wobei in geringen Mengen freier Kohlenstoff z.B. < 2 % und Stickstoff z.B. < 4 % auftreten können.

Die erfindungsgemäßen SiC-Fasern sind bis mindestens 1.500°C thermisch belastbar ohne negative Auswirkung auf die Festigkeit der Fasern. Selbst Belastungen bis 1.800°C wirken sich nicht negativ auf die Fasereigenschaften aus.
Selbst in oxidierender Atmosphäre kann ein Einsatz bis 1.400°C realisiert werden. Hierbei bildet sich eine Siliciumdioxidschicht auf der Faser, so daß eine Verschlechterung der Fasereigenschaften behindert wird.

### Beispiel 1:

### Disproportionierung mit TMEDA

Disilane und Styren werden in einem Sulfierkolben mit Magnetrührer, Innenthermometer, Rückflußkühler und Inertgaseinleitung im gewünschten Verhältnis, vorzugsweise 5 bis 50 Ma.% in Bezug auf die eingesetzte Methychlordisilanmenge, miteinander vermischt und nach Zugabe von 1 Ma.% TMEDA in Bezug auf die eingesetzte Methylchlordisilanmenge disproportioniert. Simultan wird Styren als Copolymer-Baustein mit eingebunden. Das Reaktionsgemisch wird 2 Stunden bei 138 bis 148°C am Rückfluß gehalten. Nach dem Abkühlen werden die gebildeten Methylchlorsilane abdestilliert, wobei Sumpftemperaturen oberhalb 140°C zu vermeiden sind. Danach wird erneut am Rückfluß bei 170 bis 180°C für 2 Stunden gekocht und anschließend die Monosilane und nicht umgesetztes Styren abdestilliert. Die Sumpftemperatur sollte 240°C nicht überschreiten. Nach Abkühlen werden die kurzkettigen Anteile des Reaktionsproduktes unter Vakuum (66,65 bis 133,3 Pa) bei 150°C abdestilliert. Die Polymerausbeute beträgt 40 bis 80 Ma.% im Vergleich zum Ausgangsgemisch.

### Beispiel 2:

### Heterogen katalysierte Disproportionierung in Gegenwart von Styren

200 g Methylchlordisilangemisch werden in einem gewünschten Verhältnis mit Styren (vorzugsweise 5 bis 50 Ma.% in Bezug auf die eingesetzte Methylchlordisilanmenge) in einem Sulfierkolben mit Rührer, Thermoelement, Inertgaseinleitung, Füllkörperkolonne mit aufgesetzter Ketylbrücke und Rückflußkühler vermischt. Die Füllkörperkolonne enthielt 30 g Katalysator gemäß DE 42 07 2999 und Raschigringe.
Das Reaktionsgemisch wird zum Sieden gebracht (145 bis 156°C). Die Reaktanten kontaktieren den Katalysator in der Gasphase. Die bei der Reaktion der Methylchlordisilane am Katalysator gebildeten Methylchlorsilane sind bei diesen Reaktionstemperaturen gasförmig. Das Reaktionssystem wird 1 Stunde vollständig am Rückfluß gehalten. Dabei erniedrigt sich die Sumpftemperatur auf 90 bis 110°C. Nunmehr wird der Rückfluß durch kontinuierliche Abführung der Methylchlorsilane verringert. Zwangsläufig erhöht sich die Sumpftemperatur. Die Sumpftemperatur wird so langsam auf 300°C gesteigert. Es bilden sich hochvernetzte Poly(silan-co-styrene). Wird die Reaktion bei 200°C beendet, können schwachvernetzte Polysilastyrene isoliert werden, die gleichfalls bei Zimmertemperatur als hellgelbe Festprodukte vorliegen. Die Schmelztemperaturen sind abhängig von der Reaktionsführung und liegen im Bereich von 100 bis 250°C. Die Poly(silan-co-styrene) sind in organischen Lösemitteln z.B. Toluen, Tetrachlorethylen, CCl₄, Tetrahydrofuran, CHCl₃, Dioxan löslich. Die Polymerausbeute beträgt ca. 60 bis 70 Ma.% im Vergleich zum Ausgangsgemisch.

### Beispiel 3:

### Disproportionierung in Gegenwart von Übergangsmetallkomplexen

### Versuchsdurchführung analog Beispiel 1 oder 2

Anstelle von Styren wurden die Disilane mit Dicyclopentadienyltitandibromid oder Dicyclopentadienylzirkoniumdibromid umgesetzt. In Abwandlung können die Bromsubstituenten durch andere Halogen-, Alkyl-, Arylreste oder Wasserstoff ausgetauscht werden.

### Beispiel 4:

### Darstellung von allylhaltigen Polycarbosilanen

In einer Standardapparatur, bestehend aus einem mit 2 Tropftrichtern, Rückflußkühlern und Rührkern versehenen 1000 ml Dreihalskolben, werden 4,45 g Magnesiumspäne im 20 mm abs. Diethylether unter Schutzgasatmosphäre vorgelegt. Die Tropftrichter werden mit einer Lösung von 15,4 g Allylchlorid in 50 ml abs. Diethylether bzw. einer Lösung von 10 g Poly(dichlorsiylen-co-methylen) mit einem Chlorgehalt von 56,4 Gew.% in 50 ml abs. Diethylether beschickt. Anschließend wird die Allylchloridlösung langsam zugetropft. Setzt keine Reaktion ein, wird vorsichtig erhitzt, bzw. wenig Jod zugesetzt. Nach dem Einsetzen der Reaktion wird die Polycarbosilanlösung zusammen mit der Allylchloridlösung zugetropft. Wird die Wärmeentwicklung zu heftig, wird mit einem Eisbad gekühlt, ohne die Reaktion zu unterbrechen. Nach beendeter Zugabe werden weitere 200 ml Lösungsmittel zugegeben. Die Reaktionslösung wird anschließend 2 - 3 Tage bei Raumtemperatur gerührt. Anschließend wird die Reaktionslösung in 700 ml einer wäßrigen, eisgekühlten Ammoniumchloridlösung überführt. Die organische Phase wird im Scheidetrichter abgetrennt und filtriert. Das Filtrat wird am Rotationsverdampfer eingeengt und der verbleibende Rückstand in Methylenchlorid aufgenommen. Die Lösung wird nochmals filtriert, am Rotationsverdampfer eingeengt und das Produkt bei 50°C im Vakuum getrocknet.
Das hellgelbe, viskose Produkt wird in 75 bis 80%iger Ausbeute erhalten.

### Beispiel 5:

### Darstellung von vinylhaltigen Polycarbosilanen

In einer Standardapparatur bestehend aus einem mit 2 Tropftrichtern, Rückflußkühler und Rührkern versehenen 1000 ml Dreihalskolben, werden 50 ml abs. Diethylether unter Schutzgasatmosphäre vorgelegt. Die Tropftrichter werden mit 180 ml einer 1,0 molaren Vinylmagnesiumbromid-THF-Lösung bzw. einer Lösung von 10 g Poly(dichlorsilylen-co-methylen) mit einem Cl-Gehalt von 56,4 Gew.-% in 50 ml abs. Diethylether beschickt. Anschließend wird die Polycarbosilanlösung zusammen mit der Grignardlösung unter Eisbadkühlung langsam zugetropft. Nach beendeter Zugabe werden weitere 200 ml abs. Diethylether zugegeben. Die Reaktionslösung wird anschließend 2 - 3 Tage bei Raumtemperatur gerührt. Die Reaktionslösung wird in 700 ml einer wäßrigen, eisgekühlten Ammoniumchloridlösung überführt. Unlösliche Anteile werden abfiltriert, die organische Phase im Scheidetrichter abgetrennt und am Rotationsverdampfer eingeengt. Der verbleibende Rückstand wird im Methylenchlorid aufgenommen und nochmals filtriert. Anschließend wird die Lösung am Rotationsverdampfer eingeengt und das Produkt bei 50°C im Vakuum getrocknet.
Das dunkelgelbe, hochviskose Produkt wird in 75 bis 80%iger Ausbeute erhalten.

### Beispiel 6:

### Erspinnung

Poly(methylchlor)silan-co-styren wird unter Schutzgas (Argon) bei 100°C aufgeschmolzen und unter anaeroben Bedingungen in den Druckkopf der Spinnapparatur eingefüllt.
Bei 130°C und einem Extrusionsdruck von 25 bis 30 bar wird das Polysilan durch die Spinndüse extrudiert. Als Druckmedium wird Inertgas (Stickstoff bzw. Argon) hoher Reinheit verwendet.
Die Spinndüse hat einen Kapillardurchmesser von 200 µm. Das Kapillarlängen/-durchmesserverhältnis beträgt 2:1 bzw. 3:1.
Der Düseneinlauf beträgt 60°, um turbulente Strömungen zu reduzieren.
Die am Düsenausgang gebildeten Filamente werden von der Reckeinrichtung aufgenommen.
Über die Drehzahl der Spule der Reckeinrichtung wird die Verstreckung der Faserfilamente auf Durchmesser von 10 bis 25 µm realisiert.

### Beispiel 7:

### Formstabilisierung

Die Grünfasern aus Beispiel 6 wurden in einem gasdichten Behälter mit Gaszu- und -ableitungen eingebracht.
Der Behälter wurde von außen mit 1 K/min auf 150°C aufgeheizt. Dabei sollten zu Beginn des Formstabilisierungsprozesses Temperaturen von wenigstens 30 K unterhalb des Schmelzbereiches nicht überschritten werden, um ein Verkleben der Filamente zu vermeiden.
Der Stabilisierungsprozeß wurde bei 60°C begonnen.
Der Behälter wurde mit der reaktiven Gasmischung (5 l/Std) gespült.
Als reaktives Gas wurde eine Mischung aus 90 Vol.% Argon und 10 Vol.% Ammoniak eingesetzt.
Eine Stunde wurde die Temperatur von 150°C gehalten.

### Beispiel 8:

### Pyrolyse

Die formstabilisierten Fasern aus Beispiel 6 wurden in ein verschließbares Korundrohr gegeben und in einem mit Argon gespülten Ofen gebracht. Mit einer Aufheizphase von 5 K/min. wurden die Fasern bei 1100°C über den Zeitraum von 1 Stunde pyrolisiert.
Die Röntgenphasenanalyse zeigte, daß die erhaltenen Fasern aus nanokristallinem β-Siliciumcarbid mit mittleren Kristallitgrößen von 1,6 nm bestehen.
Die Sauerstoffanalyse mittels Verbrennungsmethode wies 0,2% Sauerstoff in den Fasern nach.
Die IR-spektroskopischen Untersuchungen weisen ausschließlich Si-C-Gerüstschwingungen auf.
Bestimmungen des Kohlenstoffgehaltes, die ebenfalls mittels Verbrennungsanalyse durchgeführt wurden, ergaben nur geringe Mengen an freiem Kohlenstoff. Es wurden Kohlenstoffgehalte zwischen 1 und 2% ermittelt.
Untersuchungen zur thermischen Belastbarkeit mittels thermoanalytischer Methoden ließen bis 1.600°C unter inerter Atmosphäre (Stickstoff oder Argon) keinen signifikanten Masseverlust erkennen.
Schädigungen der Fasern, z.B. Poren, Risse, Abplatzungen waren mittels REM-Untersuchungen nicht zu beobachten.

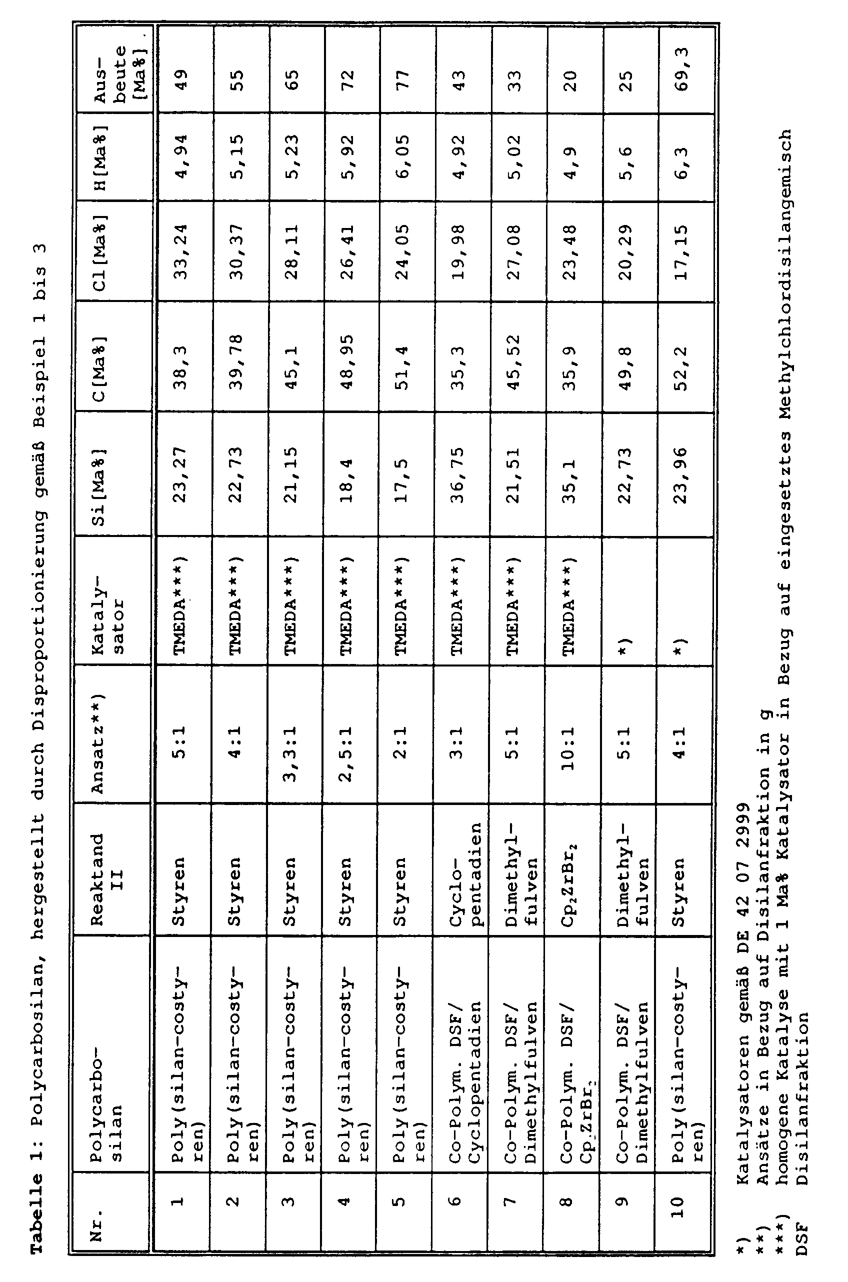

**Tabelle 2**

| Abhängigkeit der Zugfestigkeit und der Elastizitätsmoduli von der Pyrolysetemperatur von Fasern, hergestellt aus dem Poly(silan-co-styren) Nr. 10 | | |
|---|---|---|
| Faserherstellungstemperatur | Zugfestigkeit | E-Modul |
| 900° C | 1,1 GPa | 180 GPa |
| 1000° C | 1,7 GPa | 204 GPa |
| 1100 °C | 2,2 GPa | 260 GPa |
| 1200 °C | 1,9 GPa | 253 GPa |

**Tabelle 3**

| Thermische Belastbarkeit der bei 1100 °C hergestellten SiC-Fasern in Argonathmosphäre | | |
|---|---|---|
| Temperatur | Zugfestigkeit | E-Modul |
| 1400° C | 2,0 GPa | 261 GPa |
| 1600° C | 2,0 GPa | 258 GPa |
| 1700 °C | 1,9 GPa | 257 GPa |
| 1800 °C | 1,7 GPa | 252 GPa |

## Patentansprüche

1. Verfahren zur Herstellung sauerstofffreier bzw. sauerstoffarmer Siliciumcarbidformkörper, insbesondere Fasern, dadurch gekennzeichnet, daß polymere siliciumorganische Verbindungen z.B. Polysilane und Polycarbosilane, mit chemisch reaktiven Zentren, nach dem Verspinnen unter inerten Bedingungen, in Gegenwart von reaktiven Gasen oder durch thermische Behandlung formstabilisiert und danach unter anaeroben Bedingungen in einer Inertatmosphäre bei Temperaturen > 1000°C pyrolisiert werden.

2. Verfahren zur Herstellung von Siliciumcarbidformkörpern nach Anspruch 1, dadurch gekennzeichnet, daß Polycarbosilane auf Basis von Struktureinheiten der allgemeinen Formel I 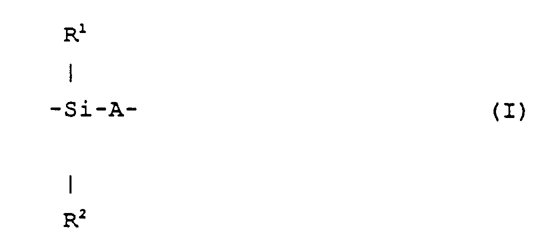 worin
R¹ für Wasserstoff, Halogen, Alkyl, Cycloalkyl, Aryl oder Arylalkyl steht, wobei R¹ in verschiedenen Einheiten ein und desselben Polycarbosilans auch unterschiedliche Bedeutung besitzen kann,
R² für Halogen, Alkyl, Cycloalkyl, Aryl oder Arylalkyl steht, wobei R² in verschiedenen Einheiten ein und desselben Polycarbosilans auch unterschiedliche Bedeutung besitzen kann und
A für einen geradkettigen oder verzweigten Alkylen-, einen Arylen-, einen substituierten Arylenrest oder einen Cycloalkylenrest steht, wobei A in verschiedenen Einheiten
ein und desselben Polycarbosilans auch unterschiedliche Bedeutung besitzen kann,
verwendet werden.

3. Verfahren zur Herstellung von Siliciumcarbidformkörpern nach Anspruch 1, dadurch gekennzeichnet, daß Polysilane bzw. Polycarbosilane auf Basis von Struktureinheiten der allgemeinen Formel II 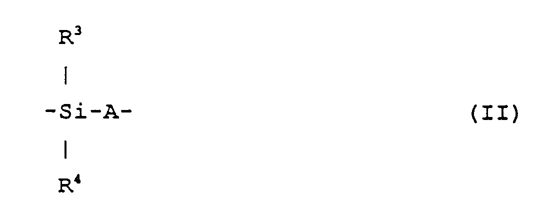 worin
R³ für Halogen, Wasserstoff, Alkyl, Cycloalkyl, Aryl, Arylalkyl, Silyl, Silylen steht, wobei R³ in verschiedenen Einheiten ein und desselben Polysilans bzw. Polycarbosilans auch unterschiedliche Bedeutung besitzen kann,
R⁴ für Halogen, Wasserstoff, Alkyl, Cycloalkyl, Aryl, Arylalkyl, Silyl, Silylen steht, wobei R⁴ in verschiedenen Einheiten ein und desselben Polysilans oder Polycarbosilans auch unterschiedliche Bedeutung besitzen kann und
A für einen Silylen-, einen geradkettigen oder verzweigten Alkylen-, einen Cycloalkylen-, einen Arylen- oder einen substituierten Arylenrest oder ein komplexstabilisiertes Metall, vorzugsweise Titan, Zirkonium, Wolfram z.B. mit Pentamethylcyclopentadienyl oder Cyclopentadienyl, steht wobei A in verschiedenen Einheiten ein und desselben Polysilans oder Polycarbosilans auch unterschiedliche Bedeutung besitzen kann,
verwendet werden, die durch katalysierte Disproportionierung von Disilanen hergestellt wurden.

4. Verfahren zur Herstellung von Siliciumcarbidformkörpern nach Anspruch 1, dadurch gekennzeichnet, daß Polycarbosilane auf Basis von Struktureinheiten der allgemeinen Formel III 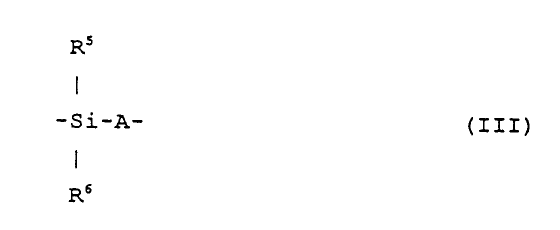 worin
R⁵ für Halogen, Wasserstoff, Alkyl, Cycloalkyl, Aryl, Arylalkyl, Alkenyl, vorzugsweise Vinyl, Cycloalkenyl, Alkinyl, vorzugsweise Ethinyl, Propargyl, Cycloalkinyl steht wobei R⁵ in verschiedenen Einheiten ein und desselben Polycarbosilans auch unterschiedliche Bedeutung besitzen kann,
R⁶ für Halogen, Alkyl, Cycloalkyl, Aryl, Arylalkyl, Alkenyl, vorzugsweise Vinyl, Cycloalkenyl, Alkinyl, vorzugsweise Ethinyl, Propargyl, Cycloalkinyl steht, wobei R⁶ in verschiedenen Einheiten ein und desselben Polycarbosilans auch unterschiedliche Bedeutung besitzen kann und
A für einen geradkettigen oder verzweigten Alkylen-, einen Cycloalkylen-, einen Alkenylen-, einen Alkinylen-, einen Arylen- oder einen substituierten Arylenrest steht, wobei A in verschiedenen Einheiten ein und desselben Polycarbosilans auch unterschiedliche Bedeutung besitzen kann, verwendet werden.

5. Verfahren zur Herstellung von Siliciumcarbidformkörper nach Anspruch 1, dadurch gekennzeichnet, daß zur Formstabilisierung als reaktive Gase Ammoniak oder Methylamine oder Schwefelwasserstoff in Gasgemischen mit Argon oder in reiner Form eingesetzt werden.

6. Verfahren zur Herstellung von Siliciumcarbidformkörpern nach Anspruch 1, dadurch gekennzeichnet, daß die Formstabilisie-rung in Gegenwart von reaktiven Gasen unter anaeroben Bedingungen, vorzugsweise unter langsamer Temperaturerhöhung auf Temperaturen nahe der Schmelzbereiche der eingesetzten Polysilane bzw. Polycarbosilane durchgeführt wird.

## Claims

1. A method of producing oxygen-free or low-oxygen silicon carbide shaped bodies, particularly fibres, characterised in that polymeric organosilicon compounds, e.g. polysilanes and polycarbosilanes, which have chemically reactive centres, are dimensionally stabilised, after spinning under inert conditions, in the presence of reactive gases or by thermal treatment and thereafter are pyrolysed under anaerobic conditions in an inert atmosphere at temperatures > 1000°C.

2. A method of producing silicon carbide shaped bodies according to claim 1, characterised in that polycarbosilanes are used which are based on structural units of formula I 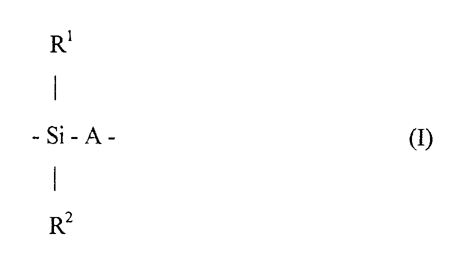 wherein
R¹ represents hydrogen, halogen, alkyl, cycloalkyl, aryl or arylalkyl, wherein R¹ can also have a different meaning in different units of one and the same polycarbosilane,
R² represents halogen, alkyl, cycloallkyl, aryl or arylalkyl, wherein R² can also have a different meaning in different units of one and the same polycarbosilane, and
A represents a straight chain or branched alkylene, an arylene or a substituted arylene radical or a cycloalkylene radical, wherein A can also have a different meaning in different units of one and the same polycarbosilane.

3. A method of producing silicon carbide shaped bodies according to claim 1, characterised in that polysilanes or polycarbosilanes are used which are produced by the catalytic disproportionation of disilanes and which are based on structural units of formula II 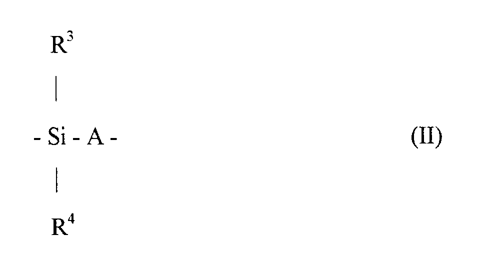 wherein
R³ represents halogen, hydrogen, alkyl, cycloalkyl, aryl, arylalkyl, silyl or silylene, wherein R³ can also have a different meaning in different units of one and the same polysilane or polycarbosilane,
R⁴ represents halogen, hydrogen, alkyl, cycloalkyl, aryl, arylalkyl, silyl or silylene, wherein R⁴ can also have a different meaning in different units of one and the same polysilane or polycarbosilane, and
A represents a silylene, a straight chain or branched alkylene, a cycloalkylene, an arylene or a substituted arylene radical or a metal, preferably titanium, zirconium or tungsten, which is stabilized by complex formation, e.g. with pentamethylcyclopentadienyl or cyclopentadienyl, wherein A can also have a different meaning in different units of one and the same polysilane or polycarbosilane.

4. A method of producing silicon carbide shaped bodies according to claim 1, characterised in that polycarbosilanes are used which are based on structural units of formula III 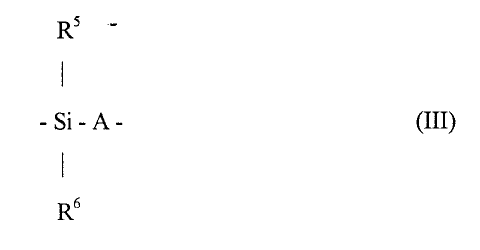 wherein
R⁵ represents halogen, hydrogen, alkyl, cycloalkyl, aryl, arylalkyl, alkenyl, preferably vinyl, cycloalkenyl, or alkynyl, preferably ethynyl, propargyl or cycloalkynyl, wherein R⁵ can also have a different meaning in different units of one and the same polycarbosilane,
R⁶ represents halogen, alkyl, cycloalkyl, aryl, arylalkyl, alkenyl, preferably vinyl, cycloalkenyl, or alkynyl, preferably ethynyl, propargyl or cycloalkyl, wherein R⁶ can also have a different meaning in different units of one and the same polycarbosilane, and
A represents a straight chain or branched alkylene, a cycloalkylene, an alkyenylene, an alkynylene, an arylene or a substituted arylene radical, wherein A can also have a different meaning in different units of one and the same polycarbosilane.

5. A method of producing silicon carbide shaped bodies according to claim 1, characterised in that ammonia or methylamines or hydrogen sulphide, in gas mixtures with argon or in pure form, are used as reactive gases for dimensional stabilisation.

6. A method of producing silicon carbide shaped bodies according to claim 1, characterised in that dimensional stabilisation is effected in the presence of reactive gases under anaerobic conditions, preferably with a slow temperature increase to temperatures near the melting ranges of the polysilanes or polycarbosilanes used.

## Revendications

1. Procédé pour la fabrication de corps de carbure de silicium exempt d'oxygène ou à faible teneur en oxygène, en particulier de fibres, caractérisé en ce que l'on soumet des dérivés organiques polymères du silicium, par exemple des polysilanes et des polycarbosilanes, contenant des centres réactifs chimiques, après filage en atmosphère inerte, à stabilisation de forme en présence de gaz réactifs ou par traitement à la chaleur puis on les pyrolyse à l'abri de l'air, en atmosphère inerte, à des températures supérieures à 1 000°C.

2. Procédé pour la fabrication de corps de carbure de silicium selon revendication 1, caractérisé en ce que l'on utilise des polycarbosilanes à base de motifs de structure de formule générale I 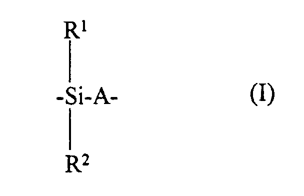 dans laquelle
R¹ représente l'hydrogène, un halogène, un groupe alkyle, cycloalkyle, aryle ou arylalkyle, les symboles R¹ pouvant avoir également des significations différentes dans les divers motifs d'un seul et même polycarbosilane,
R² représente un halogène, un groupe alkyle, cycloalkyle, aryle ou arylalkyle, les symboles R² pouvant également avoir des significations différentes dans les divers motifs d'un seul et même polycarbosilane,
A représente un groupe alkyle à chaîne droite ou ramifiée, un groupe arylène, un groupe arylène substitué ou un groupe cycloalkylène, les symboles A pouvant également avoir des significations différentes dans les divers motifs d'un seul et même polycarbosilane.

3. Procédé pour la fabrication de corps de carbure de silicium selon revendication 1, caractérisé en ce que l'on utilise des polysilanes ou polycarbosilanes à base de motifs de structure de formule générale II 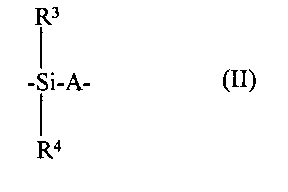 dans laquelle
R³ représente un halogène, l'hydrogène, un groupe alkyle, cycloalkyle, aryle, arylalkyle, silyle, silylène, les symboles R³ pouvant également avoir des significations différentes dans les divers motifs d'un seul et même polysilane ou polycarbosilane,
R⁴ représente un halogène, l'hydrogène, un groupe alkyle, cycloalkyle, aryle, arylalkyle, silyle, silylène, les symboles R⁴ pouvant également avoir des significations différentes dans les divers motifs d'un seul et même polysilane ou polycarbosilane, et
A représente un groupe silylène, un groupe alkylène à chaîne droite ou ramifiée, un groupe cycloalkylène, arylène ou arylène substitué ou un métal stabilisé par complexation, de préférence le titane, le zirconium, le tungstène, par exemple par un groupe pentaméthylcyclopentadiényle ou cyclopentadiényle, les symboles A pouvant également avoir des significations différentes dans les divers motifs d'un seul et même polysilane ou polycarbosilane,
qui ont été préparés par dismutation catalysée de disilanes.

4. Procédé pour la fabrication de corps de carbure de silicium selon revendication 1, caractérisé en ce que l'on utilise des polycarbosilanes à base de motifs de structure de formule générale III 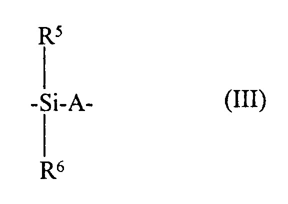 dans laquelle
R⁵ représente un halogène, l'hydrogène, un groupe alkyle, cycloalkyle, aryle, arylalkyle, alcényle, de préférence vinyle, cycloalcényle, alcynyle, de préférence éthynyle, propargyle, cycloalcynyle, les symboles R⁵ pouvant également avoir des significations différentes dans les divers motifs d'un seul et même polycarbosilane,
R⁶ représente un halogène, un groupe alkyle, cycloalkyle, aryle, arylalkyle, alcényle, de préférence vinyle, cycloalcényle, alcynyle, de préférence éthynyle, propargyle, cycloalcynyle, les symboles R⁶ pouvant également avoir des significations différentes dans les divers motifs d'un seul et même polycarbosilane, et
A représente un groupe alkylène à chaîne droite ou ramifiée, un groupe cycloalkylène, alcénylène, alcynylène, arylène ou arylène substitué, les symboles A pouvant également avoir des significations différentes dans les divers motifs d'un seul et même polycarbosilane.

5. Procédé pour la fabrication de corps de carbure de silicium selon revendication 1, caractérisé en ce que, pour la stabilisation de la forme, on utilise en tant que gaz réactifs l'ammoniac ou des méthylamines ou le sulfure d'hydrogène dans des mélanges gazeux avec l'argon ou à l'état pur.

6. Procédé pour la fabrication de corps de carbure de silicium selon revendication 1, caractérisé en ce que la stabilisation de la forme est réalisée en présence de gaz réactifs et à l'abri de l'air, de préférence avec lent réchauffage jusqu'à des températures voisines de l'intervalle de fusion du polysilane ou polycarbosilane mis en oeuvre.
